# FASCICULE DE BREVET EUROPEEN

(11) **EP 2 877 353 B1**
(45) Date de publication et mention de la délivrance du brevet: **01.05.2019**
(21) Numéro de dépôt: 13758908.1
(22) Date de dépôt: 25.07.2013
(51) Int. Cl.: B21K 7/12, B60G 7/00

(54) **BRAS DE SUSPENSION POUR VÉHICULE AUTOMOBILE ET PROCÉDÉ POUR SA FABRICATION**
LENKERBAUTEIL FÜR RADAUFHÄNGUNGEN VON KRAFTFAHRZEUGEN UND VERFAHREN ZU SEINER HERSTELLUNG
SUSPENSION ARM FOR MOTOR VEHICLE AND PROCESS FOR ITS MANUFACTURE

(30) Priorité: 26.07.2012 FR 1257262
(43) Date de publication de la demande: 03.06.2015
(73) Titulaire: Saint Jean Industries, 69220 Saint-Jean d'Ardières (FR)
(72) Inventeur: DI SERIO, Emile Thomas, F-69840 Chenas (FR)
(74) Mandataire: Cabinet Laurent & Charras
(86) Numéro de dépôt international: PCT/FR2013/051789
(87) Numéro de publication internationale: WO 2014/016519

(56) Documents cités:
- DE-A1- 10 217 209
- KR-A- 20120 030 852

## Description

L'invention se rattache aux pièces de structure automobile, tels que bras de suspension, pivots et similaires.

L'invention se rattache également au secteur technique de la fonderie ou forge de matériaux en alliages légers du type aluminium et similaires ainsi qu'au secteur technique combinant des opérations de fonderie et de forgeage.

L'invention concerne plus spécifiquement la fabrication de pièces de structure automobiles qui répondent à des cahiers des charges très spécifiques en égard de la fonctionnalité desdites pièces de structure considérées. Celles-ci sont en effet soumises à des contraintes et sollicitations techniques et environnementales très strictes en égard de leurs applications dans les domaines des véhicules automobiles, véhicules poids lourds et autres véhicules similaires. Les cahiers des charges visent par exemple la tenue aux efforts d'endurance, de crash, de flambage et des niveaux d'exigence de qualité des soudures. Les sollicitations de ces pièces de structure, dans le cas particulier des véhicules, sont aussi accentuées par l'état du sol, de roulement des véhicules, de la vitesse de ceux-ci avec une accentuation des vibrations. En situation de crash du véhicule, ces pièces sont souvent détériorées très facilement par les effets d'inertie rencontrés avec des déformations, voire cassures tout simplement.

Pour répondre à ces cahiers des charges, les fabricants, essentiellement des entreprises spécialisées en fonderie ou/et forge, vont rechercher des formes spécifiques de ces pièces de structure qui sont très résistantes en cas de chocs et de charges plus généralement. Ainsi, et de manière bien connue, les pièces de structure ont une section transversale établie en 'H' dont la génératrice suit une direction perpendiculaire à la ou les direction(s) de sollicitations.

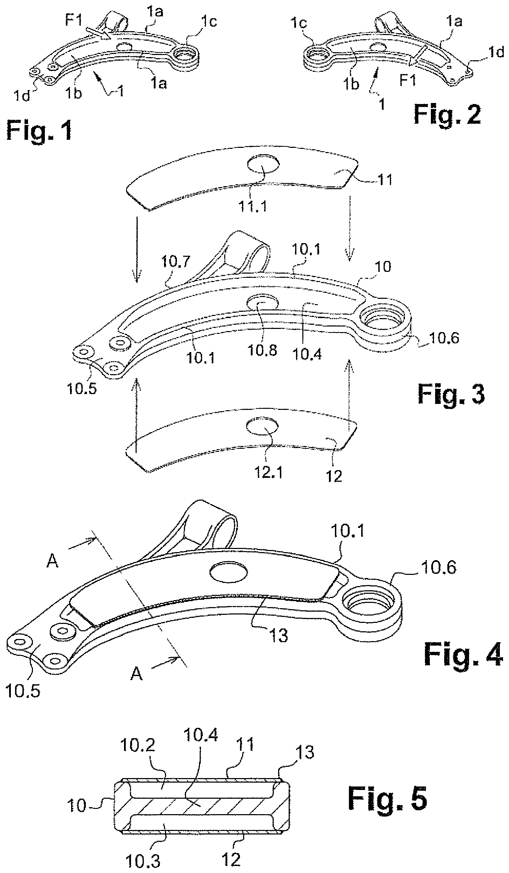

On a ainsi représenté figures 1 et 2 un exemple d'une pièce de structure du type bras de suspension qui selon l'art antérieur présente une section en 'H'.

On a ainsi représenté la pièce (1) côté recto et côté verso avec la flèche (F1) illustrant la direction des sollicitations les plus importantes.

Il y a lieu de préciser que cette dite pièce (1) est obtenue, soit par un seul procédé de fonderie ou/et forge avec l'obtention de la forme finale à obtenir directement, soit par la mise en oeuvre d'un procédé dénommé 'COBAPRESS' alliant deux opérations successives de fonderie puis de forgeage. Cela a été décrit dans le brevet EP 119365 mis au point et exploité par le Demandeur depuis 1983.

La configuration de la pièce (1) permet ainsi de définir des bordures (la) de rigidification plus ou moins hautes en fonction des applications. Sont ainsi formées de part et d'autre du plan médian longitudinal de la pièce (1) des cavités (1b) qui n'ont aucune fonction particulière. Les extrémités (1c) (1d) de la pièce sont agencées de manière connue et variable avec des manchons (le) ou anneaux de fixation, et avec des parties (1f) de fixation.

L'optimisation de ces géométries en section 'H' permet de proposer des pièces offrant un meilleur rapport masse/performance. Et l'on sait par ailleurs, selon des notions élémentaires de mécanique des solides que, à masse égale, un tube apporte plus de raideur qu'une tige de section pleine.

La recherche des fabricants de ce type de pièces de structure est donc de concevoir des pièces de structure comportant des sections ou zones creuses pour lesquelles les inerties sont éloignées de la fibre neutre afin d'optimiser le moment quadratique, une amélioration des performances de tenue aux efforts tout en réduisant au maximum la masse de la pièce.

Cette recherche d'optimisation des formes de la pièce de structure devait néanmoins tenir compte des contraintes et sollicitations techniques et environnementales précitées en garantissant à la pièce une excellente rigidité tout en réduisant sa masse. En d'autres termes, la problématique était de répondre à des exigences à priori paradoxales et contradictoires de légèreté et de rigidité de la pièce, sans rajouter de la matière.

La solution apportée par le Demandeur répond pleinement aux exigences précitées, aussi bien dans le cadre de pièces de structure obtenues en fonderie, que dans un procédé mixte de fonderie et de forgeage connu sous la marque COBAPRESS et objet du brevet EP 119365.

On connait par ailleurs par le brevet KR 2012 0030852 la fabrication de pièces de suspension pour véhicules automobiles qui présentent sur la surface extérieure d'un corps plein des parties apparentes rapportées de rigidification à des fins de limiter ou supprimer des effets de cassure au niveau des parties d'attaches d'extrémité de la pièce de suspension.

On connaît par le brevet DE 10217209 la réalisation de bras en alliage léger pour une suspension de roue de véhicule automobile. En pratique, selon ce document le bras est constitué par l'adjonction de deux plaques parallèles qui viennent se fixer sur des éléments d'extrémité (5 et 11) en définissant un volume intérieur creux. La fabrication d'un tel ensemble reste complexe avec de nombreuses opérations pour assurer la liaison des éléments entre eux.

En outre, ce document décrit des pièces aux formes complexes et avec des sections réduites qui ne peuvent pas être obtenues aisément en fonderie avec des alliages légers de fonte à hautes caractéristiques mécaniques.

Aucun de ces documents ne met en oeuvre la fabrication d'une pièce monobloc obtenue par des opérations de fonderie ou de forgeage.

Selon une première caractéristique de l'invention, le procédé de fabrication de pièces de structure creuse obtenues au moins par une opération de fonderie, et/ou de forge, lesdites pièces ayant un profil en section transversale ouverte non limité au type H ou U est remarquable en ce que l'on rapporte sur au moins une des faces de la pièce de structure sur tout ou partie de sa section transversale creuse apparente entre ses bordures périphériques extérieures ou intérieures au moins une tôle de recouvrement en un matériau métallique rigide, en ce que l'on fixe de manière mécanique la ou lesdites tôle(s) de recouvrement ainsi rapportées sur le chant desdites bordures périphériques de la pièce de structure en section transversale, en ce que la ou les tôle(s) de recouvrement recouvrent tout ou partie des cavités intérieures formées sur les faces ouvertes de ladite pièce en section transversale, et en ce que la ou les tôle(s) de recouvrement ont une triple fonction, d'augmenter la rigidité de la pièce de structure, d'absorber les chocs en se déformant dans leur plan tout en restant solidaire de ladite pièce et d'autoriser la réduction de la masse de la pièce de structure et de permettre une optimisation du ratio masse/performances.

Ces caractéristiques et d'autres encore ressortiront bien de la suite de la description.

Pour fixer l'objet de l'invention illustré de manière non limitative aux figures des dessins où :
Les figures 1 et 2 sont des vues de dessus d'un exemple de pièces de structure selon l'art antérieur avec l'identification par la flèche (F1) des zones de sollicitation,
La figure 3 est une vue en perspective avant montage d'une pièce de structure mise en oeuvre selon l'invention avant la réception et fixation de tôles de recouvrement, dans un exemple de mise en oeuvre avec une section en 'H',
La figure 4 est une vue de la pièce de structure selon la figure 3 après montage et fixation de la tôle de recouvrement,
La figure 5 est une vue en coupe transversale selon la ligne AA de la figure 4,
La figure 6 est une vue partielle et en perspective d'une forme complexe et différente de celle de la pièce de structure illustrée figure 3,
Les figures 7, 8 et 9 sont des vues de dessus de la pièce de structure selon la figure 6 respectivement seule, puis en recouvrement partiel par la tôle de recouvrement, puis en recouvrement total par ladite tôle de recouvrement.

Afin de rendre plus concret l'objet de l'invention, on le décrit maintenant d'une manière non limitative illustré aux figures des dessins.

L'invention concerne la conception et la fabrication de pièces de structure creuse, notamment liaison au sol, qui sont utilisées par exemple et non limitativement en tant que composants pour véhicules automobiles, véhicules poids lourds et autres véhicules de ce type.

Ces pièces de structure creuse sont par exemple des bras de suspension, des pivots, des biellettes, triangles de suspension non limitativement et sont soumis à des sollicitations techniques et environnementales très élevées. Ces pièces (10) sont réalisées en fonderie, en forge ou obtenues selon le procédé mixte COBAPRESS de coulage de fonderie puis de forgeage selon l'enseignement du brevet européen précité. Elles ont une configuration et profil ouvert (transversal) non limité au type en U ou en 'H' par exemple avec des bordures périphériques (10.1), une ou des cavités creuses intérieures (10.2) (10.3), par exemple de part et d'autre de leur masse médiane (10.4) de liaison en cas de section en 'H'. Les extrémités (10.5) (10.6) sont agencées selon les besoins et les applications avec des zones de fixation des bagues ou manchons.

Selon l'invention, la pièce de structure creuse (10) reçoit sur sa ou ses face(s) comprenant la ou les ouverture(s) recto et/ou verso une ou des tôle(s) de recouvrement (11-12) qui ont un profil complémentaire à celui de la pièce de structure pour venir se positionner et se fixer sur le chant (10.7) de chacune des bordures périphériques intérieure et extérieure de la pièce de structure par superposition. La ou les tôle(s) de recouvrement (11-12) recouvrent ainsi tout ou partie des cavités intérieures formées sur les faces ouvertes (recto et verso) de la pièce de structure.

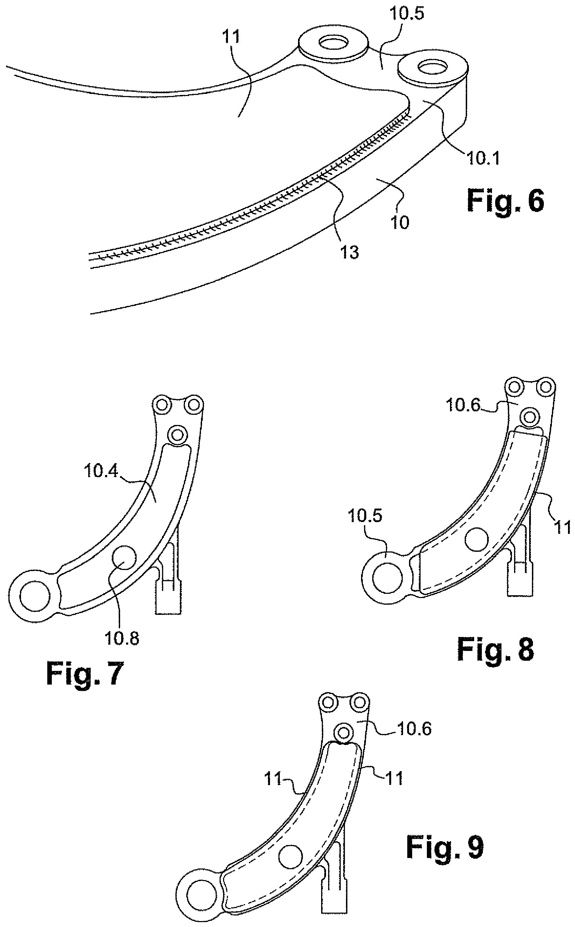

On a ainsi représenté aux figures 4 et 8, un recouvrement partiel, et à la figure 9, un recouvrement total.

En fonction de la configuration de la pièce de structure creuse et de son application, celle-ci peut présenter une ou des ouvertures (10.8) pour des fonctionnalités spécifiques, et dans ce cas, la ou les tôle(s) présenteront une ou des ouvertures (11.1) (12.1) en fonction des besoins pour être en correspondance.

La pièce de structure creuse est réalisée avantageusement en matériau métallique, et plus particulièrement en alliage d'aluminium.

La ou les tôle(s) de recouvrement (11-12) sont réalisées en des matériaux métalliques compatibles avec le matériau de la pièce de structure pour pouvoir être positionnées et fixées par tout procédé d'assemblage : soudage, vissage, collage, rivetage, brasage ... et de manière à assurer une liaison mécanique par un moyen (13). Elles sont par exemple en tôles planes ou préformées. Par exemple, des cordons de soudure (13) sont ainsi établis sur le chant des bordures périphériques de la pièce de structure, ou sont déterminés en fonction du profil de la pièce de structure.

Selon une autre disposition de l'invention, la ou les tôle(s) de recouvrement peuvent être en une ou plusieurs parties en laissant des espaces entre elles. Le positionnement de la ou lesdites tôles est déterminé par le fabricant en tenant compte des spécificités de la tôle de liaison et des performances demandées pour la pièce.

D'une manière avantageuse, l'invention laisse une large capacité d'adaptation avec des profils plus ou moins complexes de la pièce de structure réceptrice.

Les tôles de recouvrement (11-12) doivent être parfaitement fixées et soudées sur la pièce de structure. Ces tôles ont une triple fonction, à savoir :
- Elles permettent d'augmenter la rigidité de la pièce de structure,
- Elles permettent d'absorber les chocs rencontrés inhérents à des sollicitations inhabituelles et/ou accidentelles en se déformant dans leur plan tout en restant solidaires de la pièce jusqu'à rupture de la zone de structure,
- Elles permettent, en outre, une optimisation du rapport masse/performances.

Le procédé de fabrication de pièces de structure creuse obtenues au moins par une opération de fonderie, de forge ou hybride fonderie forge, lesdites pièces ayant un profil en section transversale ouverte est remarquable en ce que l'on rapporte sur au moins une des faces de la pièce sur tout ou partie de sa section transversale creuse apparente entre ses bordures périphériques extérieures ou intérieures au moins une tôle de recouvrement en un matériau métallique rigide, et en ce que l'on fixe de manière mécanique la ou lesdites tôle(s) de recouvrement ainsi rapportées sur le chant desdites bordures périphériques de la pièce de structure en section transversale, la ou lesdites tôle(s) de recouvrement assurant une fonction de rigidification de la pièce de structure et d'absorption de chocs par déformation dans leur plan.

Les avantages ressortent bien de l'invention et on souligne tout d'abord le caractère innovant de cette réalisation, sa relative simplicité de réalisation car il faut également totalement maîtriser la liaison entre la pièce de structure et les tôles de recouvrement. On souligne l'optimisation du rapport masse/performances.

Ainsi la solution développée et mise en oeuvre par l'invention présente une seule pièce obtenue par fonderie et/ou forge réalisable notamment par le procédé COBAPRESS ci-avant identifié, en utilisant des alliages légers en fonte à toutes caractéristiques mécaniques et qui comprend des zones en mesurer de recevoir une tôle augmentant la raideur. Cette solution permet la coulée simultanée de toutes les zones fonctionnelles de la pièce en engageant le minimum de matière nécessaire qui est ensuite rigidifiée par l'ajout d'une tôle.

Les documents de l'art antérieur ne répondent pas à cette problématique et ne suggèrent pas la solution de l'invention

## Revendications

1. Procédé de fabrication de pièces de structure creuse obtenues au moins par une opération de fonderie, et/ou de forge, lesdites pièces ayant un profil en section transversale ouverte non limité au type H ou U, **caractérisé en ce que** l'on rapporte sur au moins une des faces de la pièce de structure (10) sur tout ou partie de sa section transversale creuse apparente entre ses bordures périphériques (10.1) extérieures ou intérieures au moins une tôle de recouvrement (11-12) en un matériau métallique rigide, **en ce que** l'on fixe de manière mécanique la ou lesdites tôle(s) de recouvrement (11-12) ainsi rapportées sur le chant (10.7) desdites bordures périphériques (10.1) de la pièce de structure en section transversale, **en ce que** la ou les tôle(s) de recouvrement (11-12) recouvrent tout ou partie des cavités intérieures (10.2, 10.3) formées sur les faces ouvertes de ladite pièce en section transversale, **et en ce que** la ou les tôle(s) de recouvrement (11-12) ont une triple fonction, d'augmenter la rigidité de la pièce de structure, d'absorber les chocs en se déformant dans leur plan tout en restant solidaire de ladite pièce et d'autoriser la réduction de la masse de la pièce de structure et de permettre une optimisation du ratio masse/performances.

2. Pièce de structure creuse obtenue par au moins une opération de fonderie et/ou forge comprenant une configuration et un profil en section transversale ouverte non limité au type en U ou en 'H', avec des bordures périphériques (10.1) extérieures ou intérieures, des cavités creuses intérieures (10.2, 10.3), et dont les extrémités (10.5, 10.6) sont agencées avec des zones de fixation, **caractérisée en ce que** la pièce de structure (10) reçoit sur sa ou ses faces ouvertes sur tout ou partie de sa section transversale creuse apparente entre ses bordures périphériques (10.1) une ou des tôle(s) de recouvrement (11-12) ayant un profil complémentaire à ladite pièce pour se positionner et se fixer sur le chant (10.7) de chacune des bordures périphériques (10.1) intérieures et extérieures par superposition et par fixation d'un moyen (13) de liaison, **en ce que** la ou les tôle(s) de recouvrement (11-12) recouvrent tout ou partie des cavités intérieures (10.2, 10.3) formées sur les faces ouvertes de ladite pièce en section transversale, **et en ce que** la ou les tôle(s) de recouvrement ont une triple fonction d'augmenter la rigidité de la pièce de structure, d'absorber les chocs en se déformant dans leur plan tout en restant solidaire de ladite pièce et d'autoriser la réduction de la masse de la pièce de structure et de permettre une optimisation du ration masse/performances.

3. Pièce de structure creuse selon la revendication 2, **caractérisée en ce que** la pièce de structure présente des ouvertures (10.8) et les tôles (11-12) des ouvertures (11.1, 12.1).

4. Pièce de structure creuse selon la revendication 2, **caractérisée en ce que** la ou les tôle(s) de recouvrement (11-12) sont réalisées en matériau métallique et compatible avec le matériau de la pièce de structure.

5. Pièce de structure creuse selon la revendication 2, **caractérisée en ce que** la ou les tôle(s) de recouvrement (11-12) sont fixées sur la pièce de structure par tout procédé d'assemblage : soudage, vissage, collage, rivetage, brasage ...et de manière à assurer une liaison mécanique.

6. Pièce de structure selon l'une quelconque des revendications 2 à 5 **caractérisée** dans son application aux véhicules.

## Patentansprüche

1. Verfahren zur Herstellung von Hohlstrukturteilen, erhalten über ein Schmelz- und/oder Schmiedeverfahren, wobei diese Teile ein Profil mit einem offenen Querschnitt haben, das nicht auf den Typ H oder U beschränkt ist, **dadurch,** dass auf mindestens einer der Seiten des Strukturteils (10) über den gesamten oder Teilen des hohlen Querschnitts, der zwischen den umlaufenden Rändern (10.1) außen oder innen sichtbar ist, ein Abdeckblech (11-12) aus starrem Blech montiert ist und **dadurch, dass** das oder die so anmontierten Abdeckblech(e) (11-12) an der Kante (10.7) dieser umlaufenden Rändern (10.1) des Strukturteils im Querschnitt mechanisch befestigt ist(sind), **dadurch dass** das oder die Abdeckblech(e) (11-12) die Innenhohlräume (10.2, 10.3) ganz oder teilweise bedecken, die auf den offenen Seiten dieses Teils im Querschnitt gebildet sind **und dadurch, dass** das oder die Abdeckblech(e) (11-12) eine dreifache Funktion haben, und zwar die Erhöhung der Steifigkeit des Strukturteils, Absorption von Erschütterungen durch Verformung in ihrer Ebene, wobei sie gleichzeitig mit diesem Strukturteil fest verbunden bleiben und Ermöglichung einer Optimierung des Masse/ Leistungsverhältnisses.

2. Hohlstrukturteil, erhalten durch ein Schmelz- und/ oder Schmiedeverfahren, umfassend eine Konfiguration und ein Profil mit offenem Querschnitt, das nicht auf den Typ H oder U beschränkt ist mit umlaufenden Rändern (10.1) außen oder innen, Innenhohlräumen (10.2, 10.3), deren Endstücke (10.5, 10.6) mit Befestigungszonen ausgeführt sind, **dadurch, dass** das Strukturteil (10) auf der offenen Seite oder Seiten des Strukturteils (10) über den gesamten offenliegenden Querschnitt zwischen den umlaufenden Rändern (10.1) mit einem oder mehreren Abdeckblech(en) (11-12) versehen wird, deren Profil komplementär ist zu diesem Teil und die auf der Kante (10.7) jedes der umlaufenden Ränder (10.1) außen oder innen positioniert und befestigt sind, durch Überlagerung und Befestigung mit einer Verbindungsvorrichtung (13), **dadurch, dass** das oder die Abdeckblech(e) (11-12) das oder die die Innenhohlräume (10.2, 10.3) abdecken, die auf der oder den offenen Seite oder Seiten des Strukturteils im Querschnitt gebildet werden und **dadurch, dass** das oder die Abdeckblech(e) eine dreifache Funktion haben, und zwar die Erhöhung der Steifigkeit des Strukturteils, Absorption von Erschütterungen durch Verformung in ihrer Ebene, wobei sie gleichzeitig mit diesem Strukturteil fest verbunden bleiben und Ermöglichung einer Optimierung des Masse/ Leistungsverhältnisses .

3. Hohlstrukturteil gemäß Anspruch 2, **dadurch, dass** das Strukturteil Öffnungen (10.8) und Abdeckblech(e) (11-12) der Öffnungen (11.1, 12.1) aufweist.

4. Hohlstrukturteil gemäß Anspruch 2, **dadurch, dass** das oder die Abdeckblech(e) (11-12) aus Metall bestehen und mit dem Material des Strukturteils kompatibel sind.

5. Hohlstrukturteil gemäß Anspruch 2, dadurch, dass das oder die Abdeckblech(e) (11-12) auf dem Strukturteil mittels aller Verbindungstechniken befestigt sind, also Schweissen, Schrauben, Kleben, Nieten, Löten... und zwar so, dass eine mechanische Verbindung gewährleistet ist.

6. Strukturteil gemäß einem der vorstehenden Ansprüche 2 bis 5, durch seine Anwendung für Fahrzeuge.

## Claims

1. Manufacturing method of hollow structural parts obtained at least by a casting and/or forging operation, the said parts having an open cross-sectional profile not limited to type H or U, **characterised in that** we associate on at least one surface of the structural part (10) on all or part of its apparent hollow cross section between its outer and inner peripheral borders (10.1) at least one cover sheet (11-12) made using rigid metallic material, **and in that** we mechanically fix the said cover sheet(s) (11-12) thus associated with the edge (10.7) of said peripheral borders (10.1) of the structural part in cross-section, and **in that** the cover sheet(s) (11-12) cover all or part of the inner cavities (10.2) 10.3) formed on the open sides of the said part in cross-section, and **in that** the or the cover sheet(s) have a triple function, to increase the rigidity of the structural part, to absorb the shock by deforming in their plane while remaining integral with the said part and to allow the reduction of the mass of the structural part and allow the optimisation of the mass/performance ratio.

2. Hollow structural part obtained at least by a casting and/or forging operation comprising an open cross-sectional configuration and profile not limited to type H or U with outer and inner peripheral borders (10.1), inner hollow cavities (10.2) (10.3), and whose ends (10.5, 10.6) are arranged with the fixing areas, **characterised in that** the structural part (10) receives on its open surface(s) on all or part of its apparent hollow cross-section between its peripheral borders (10.1) one or more cover sheet(s) (11-12) having a profile complementary to the said part to be positioned and fixed on the edge (10.7) of each of the inner and outer peripheral borders (10.1) by superimposing and fixing a connection means (13), and **in that** the cover sheet(s) (11-12) cover all or part of the inner cavities (10.2, 10.3) formed on the open sides of the said part in cross-section ,and **in that** the cover sheet(s) have a triple function, to increase the rigidity of the structural part, to absorb the shock by deforming in their plane while remaining integral with the said part and to allow the reduction of the mass of the structural part and allow the optimisation of the mass/performance ratio.

3. Hollow structural part as claimed in claim 2, **characterised in that** the structural part has openings (10.8) and the sheets (11-12) has openings (11.1, 12.1).

4. Hollow structural part as claimed in claim 2, **characterised in that** the cover plate(s) (11-12) are made of metallic material compatible with the material of the structural part.

5. Hollow structural part as claimed in claim 2, **characterised in that** the cover plate(s) (11-12) are fixed on the structural part by any method of assembly: welding, screwing, gluing, riveting, brazing, etc. and so as to ensure a mechanical connection.

6. Structural part according to any one of claims 2 to 5, **characterised in** its application to vehicles.
